(19) Europäisches Patentamt
European Patent Office
Office européen des brevets

(11) **EP 1 626 256 B1**

(12) **EUROPÄISCHE PATENTSCHRIFT**

(45) Veröffentlichungstag und Bekanntmachung des Hinweises auf die Patenterteilung:
**19.12.2007 Patentblatt 2007/51**

(51) Int Cl.:
*G01J 3/28* (2006.01)  *G01J 3/36* (2006.01)
*G06T 1/00* (2006.01)  *G06K 9/68* (2006.01)

(21) Anmeldenummer: **05090229.5**

(22) Anmeldetag: **09.08.2005**

(54) **Verfeinerung der örtlichen Auflösung multispektraler Fernerkundungsdaten**

Refinement of spatial resolution of multispectral remote sensing data

Affinement de la résolution spatiale de données multispectrales de télédétection

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **11.08.2004 DE 102004039634**

(43) Veröffentlichungstag der Anmeldung:
**15.02.2006 Patentblatt 2006/07**

(73) Patentinhaber: **Deutsches Zentrum für Luft- und Raumfahrt e.V.**
**51147 Köln (DE)**

(72) Erfinder:
- **Borg, Erik**
  **16247 Joachimsthal (DE)**
- **Fichtelmann, Bernd Dr.**
  **17235 Neustrelitz (DE)**
- **Richter, Rudolf Dr.**
  **82234 Wessling (DE)**
- **Bachmann, Martin**
  **97070 Würzburg (DE)**

(74) Vertreter: **Brunotte, Joachim Wilhelm Eberhard**
**Patentanwälte Bressel und Partner**
**Radickestrasse 48**
**12489 Berlin (DE)**

(56) Entgegenhaltungen:
- **"Unmixing-based multisensor multiresolution image fusion" IEEE Transactions on Geoscience and Remote Sensing IEEE USA, Bd. 37, Nr. 3, 1999, Seiten 1212-1226, XP011021315 ISSN: 0196-2892**
- **QI, Z.R.: "A new data fusion method for improving CBERS-1 IRMSS images based on CCD image" XXTH ISPRS CONGRESS PROCEEDINGS, Bd. XXXV, Nr. B4, Juli 2004 (2004-07), Seiten 910-913, XP002347144 Gefunden im Internet: URL:http://www.isprs.org/istanbul2004/comm 4/comm4.html>**
- **VARSHNEY, P.K.: "Multisensor data fusion" Electronics & Communication Engineering Journal IEE UK, Bd. 9, Nr. 6, Dezember 1997 (1997-12), Seiten 245-253, XP002347145 ISSN: 0954-0695**
- **POHL C ET AL: "MULTISENSOR IMAGE FUSION IN REMOTE SENSING: CONCEPTS, METHODS AND APPLICATIONS" INTERNATIONAL JOURNAL OF REMOTE SENSING, BASINGSTOKE, HANTS, GB, Bd. 19, Nr. 5, 20. März 1998 (1998-03-20), Seiten 823-854, XP008044449**

**Beschreibung**

Die Erfindung betrifft eine Vorrichtung und ein Verfahren zum Verarbeiten multispektraler Fernerkundungsdaten. Die Erfindung betrifft insbesondere Fernerkundungs-Bilddaten von Objekten an der Erdoberfläche und/oder der Atmosphäre, wobei die Bilddaten von Fernerkundungssatelliten gewonnen werden.

In den letzten Jahren wurden verstärkt Satellitensysteme mit Sensorpaketen bestückt, bei denen mehrere örtlich grob auflösende erste Sensoren (wegen der mehreren verschiedenen Spektralbereiche auch multispektrale Sensoren genannt) mit einem örtlich feiner auflösenden zweiten, panchromatischen Sensor ergänzt wurden, wobei die multispektralen Sensoren für einfallende Strahlung in jeweils einem schmaleren Spektralbereich (Wellenlängenbereich) empfindlicher sind als der panchromatische Sensor. Dieser Trend folgt einerseits aus der Tatsache, dass viele Anwendungen für Satellitendaten eine hohe spektrale Auflösung bei einer feinen örtlichen Auflösung benötigen, andererseits aber die Übertragungsmenge bei der Übertragung von Fernerkundungsdaten von einem Satelliten zur Bodenstation begrenzt ist. Insbesondere in den Bereichen der Geologie, der Landnutzungskartierung und/oder der Aktualisierung von Karten, z. B. für die Land- und Forstwirtschaft, werden die Daten für Anwendungen genutzt, die unter dem Begriff "change detection" subsumiert werden. Ein anderes Gebiet betrifft die Überwachung von Naturkatastrophen.

Die Veröffentlichung "A new data fusion method for improving CBERS-1 IRMSS images based on CCD image" von Z.R. Qi, veröffentlicht in The International Archives of Photogrammetry, Remote Sensing and Spatial Information Sciences, Vol. 34, Part XXX (XP 002347144) beschreibt ein Verfahren zum Fusionieren von Daten. Pixel in einem Bild mit niederigerer Auflösung entsprechen einer gegebenen Anzahl von Pixeln in einem Bild mit höherer Auflösung, nachdem eine präzise Registrierung vorgenommen wurde. Zunächst wird für jedes Pixel in einem Bild mit niedriger Auflösung der Durchschnittswert seiner entsprechenden Sub-Pixel-Werte in einem Bild mit hoher Auflösung berechnet. Zweitens wird die Differenz zwischen dem Pixel-Helligkeitswert in dem Bild mit niedriger Auflösung und seinem Durchschnittswert berechnet. In dem Bild mit hoher Auflösung wird dann die Differenz zu jedem Sub-Pixel-Wert hinzu addiert.

Die Veröffentlichung "Unmixing-Based Multisensor Multiresolution Image Fusion" von Boris Zhukov et al., veröffentlicht in IEEE Transactions on Geoscience and Remote Sensing, Vol. 37, No. 3, May 1999, Seiten 1212 bis 1226 (XP 011021315) beschreibt den Algorithmus der so genannten Multisensor-Multiauflösungs-Technik (englisch: multisensor multiresolution technique, MMT). Das Verfahren kann angewendet werden, um niedrig auflösende Bilder zu entmischen, wobei Informationen über ihre Pixel-Komposition von coregistrierten hochauflösenden Bildern verwendet wird.

Es ist eine Aufgabe der vorliegenden Erfindung, bei Systemen der genannten Art die örtliche Auflösung zumindest eines ersten (multispektralen) Sensors zu verfeinern, wobei die von dem ersten Sensor gemessenen und verfeinerten Messwerte möglichst gut der tatsächlich einfallenden Strahlung entsprechen sollen. Die vorliegende Erfindung soll insbesondere neben einer Verfeinerung der örtlichen Auflösung eine quantitative und z. B. computergestützte Auswertung ermöglichen. Die Verfeinerung soll daher nicht von subjektiven Entscheidungen eines Benutzers abhängen.

Die Aufgabe wird durch die Gegenstände der beigefügten Patentansprüche gelöst.

Die Erfindung beinhaltet insbesondere ein physikalisch basiertes numerisches Verfahren zur Verfeinerung der örtlichen Auflösung multispektraler Fernerkundungsdaten, wobei die Daten co-registrierter und zeitgleich aufgezeichneter erster (multispektraler) Sensoren und eines zweiten (panchromatischen) Sensors unterschiedlicher örtlicher und spektraler Auflösung eingelesen und verarbeitet werden.

Unter einem panchromatischen Kanal wird ein Messkanal eines (panchromatischen) Sensors verstanden, der einfallende elektromagnetische Strahlung in einem breiten Spektralbereich detektieren kann. Breit ist der Spektralbereich im Verhältnis zu den spektralen Messbereichen einer Mehrzahl von so genannten multispektralen Sensoren. Der spektrale Messbereich des panchromatischen Sensors umfasst dabei zumindest Teilbereiche der spektralen Messbereiche der multispektralen Sensoren. Dabei können sich die spektralen Messbereiche der multispektralen Sensoren überlappen und/oder innerhalb des spektralen Messbereichs des panchromatischen Sensors Lücken vorhanden sein, in denen keiner der multispektralen Sensoren Strahlung detektieren kann. Vorzugsweise erstreckt sich keiner der spektralen Messbereiche der multispektralen Sensoren über die Grenzen des spektralen Messbereichs des panchromatischen Sensors hinaus. Zwar kann ein Satellit auch weitere Sensoren aufweisen, deren spektrale Messbereiche sich über den Bereich des panchromatischen Sensors hinaus erstrecken oder außerhalb davon liegen. Diese multispektralen Sensoren werden vorzugsweise jedoch nicht bei der Verfeinerung der örtlichen Auflösung mit berücksichtigt.

Unter einem Kanal bzw. einem Messkanal werden auf einen einzigen durchgehenden Spektralbereich bezogene Messwerte verstanden, die sich insbesondere mit fortschreitender Zeit ändern können. Die Messwerte können einem zeitlich konstanten, von einem Messsensor erfassten Raumwinkelbereich entsprechen (wobei sich die Ausrichtung des Raumwinkelbereichs mit der Zeit ändern kann) und/oder können räumlich in eine Anzahl von Bildelementen (Pixeln) untergliedert sein bzw. ein aus den Bildelementen zusammengesetztes Bild ergeben.

Bei einer Ausführungsform des erfindungsgemäßen Verfahrens wird vorausgesetzt, dass sowohl der panchromatische Kanal als auch die spektralen Kanäle kalibriert und optional auch einer Sonnenstands- und/oder Atmosphärenkorrektur unterworfen wurden. Insbesondere damit ist es möglich, z. B. Messdaten von Strahldichten der auf den Sensor einfallenden Strahlung und/oder Reflektionsgraden (Reflexion der auf das Objekt der Fernerkundung einfallenden solaren Strahlung) auszuwerten und zu verarbeiten.

Das System dient insbesondere der automatischen Ableitung physikalisch begründeter, örtlich feiner auflösender Fernerkundungsdaten aus den Messdaten der multispektralen Sensoren. Die feiner aufgelösten Fernerkundungsdaten können anschließend quantitativ ausgewertet und/oder auf andere Weise weiterverarbeitet werden. Bei der Verfeinerung der örtlichen Auflösung kann insbesondere eine räumliche Energiebilanz (und/oder Leistungsbilanz) unter Nutzung von Messwerten des panchromatischen Kanals und eine spektrale Energiebilanz (und/oder Leistungsbilanz) unter Nutzung von Messwerten der multispektralen Kanäle erstellt und/oder berücksichtigt werden. Auf diese Weise wird die Verschneidung (Fusion) des panchromatischen Kanals und der multispektralen Kanäle mathematisch ermöglicht.

Diese Vorgehensweise basiert im Gegensatz zu einer Grauwertoperation insbesondere auf einer Nutzung von Reflexionswerten, Strahldichten und/oder äquivalenten Größen auf die Verarbeitung von Messwerten der multispektralen Kanäle, die mit dem panchromatischen Kanal auch spektral überlappen, und auf der optionalen Nutzung von Kanalfiltern.

Um fehlende und/oder überlappende Spektralbereiche der multispektralen Kanäle innerhalb des spektralen Messbereichs des panchromatischen Kanals abzudecken, kann optional ein künstlicher (fiktiver) Kanal eingeführt werden. Ferner kann das Ergebnis der örtlichen Verfeinerung, sofern erforderlich, iterativ mit Hilfe der genannten Bilanzierung verbessert werden.

Das Verfahren besteht z. B. aus den Schritten:

1) Vorverarbeitung der Daten (Ableitung der Strahldichten),
2) multispektrale Leistungsbilanzierung,
3) örtliche Leistungsbilanzierung,
4) Fusionierung sowie
5) Qualitätskontrolle bzw. Qualitätsverbesserung.

Insbesondere wird Folgendes vorgeschlagen: Ein Verfahren zum Verarbeiten multispektraler Fernerkundungsdaten, wobei

a) durch Fernerkundung gewonnene erste Messdaten zumindest eines ersten Messkanals verwendet werden,
b) durch Fernerkundung gewonnene zweite Messdaten eines zweiten Messkanals verwendet werden,
c) zumindest ein erster Spektralbereich, in dem einfallende Strahlung durch die ersten Messdaten erfasst wird und der dem ersten Messkanal oder einem der ersten Messkanäle zugeordnet ist, schmaler ist als ein zweiter Spektralbereich, in dem einfallende Strahlung durch die zweiten Messdaten erfasst wird,
d) der erste Spektralbereich oder die ersten Spektralbereiche vollständig in dem zweiten Spektralbereich enthalten ist oder sind,
e) die zweiten Messdaten örtlich feiner aufgelöst sind als die ersten Messdaten,
f) in einem örtlichen Bereich oder Teilbereich der zweiten Messdaten eine örtliche Verteilung einer in den zweiten Messdaten erfassten Strahldichte, eines Reflexionsgrades oder einer äquivalenten Strahlungsgröße ermittelt wird und auf einen entsprechenden örtlichen Bereich oder Teilbereich der ersten Messdaten übertragen wird, sodass die örtliche Auflösung der ersten Messdaten verfeinert wird.

Gliederungspunkte c) und d) schließen insbesondere den Fall mit ein, dass zumindest ein Spektralbereich, in dem einer der ersten Messkanäle Strahlung erfasst, über die Grenzen des zweiten Spektralbereichs hinausgeht. In diesem Fall kann beispielsweise vor der oben beschriebenen Verfeinerung der Auflösung eine Vorverarbeitung der Messdaten stattfinden. Z. B. kann unter Verwendung der so genannten Responsefunktion des Sensors aus den Messdaten des Messkanals ein neuer (vor-prozessierter) Messkanal gebildet werden, der ausschließlich Strahlung innerhalb der Grenzen des zweiten Spektralbereichs berücksichtigt. Im Ergebnis wird der Spektralbereich des Messkanals so beschränkt, dass die Bedingung gemäß Gliederungspunkt d) erfüllt ist. Allerdings wird die Unsicherheit in der Aussagekraft des Verfahrens der Verfeinerung der örtlichen Auflösung mit der Größe des Spektralbereichs größer, der außerhalb des zweiten Spektralbereichs liegt, sodass die Unsicherheit oder ein entsprechender Fehler angegeben werden sollte. Bevorzugt wird daher, ausschließlich Messdaten von multispektralen Sensoren zu verwenden, deren Mess-Spektralbereiche vollständig innerhalb des zweiten Spektralbereichs liegen.

Die örtliche Verteilung der zweiten Messdaten kann identisch auf die ersten Messdaten übertragen werden. Bereits hierdurch wird eine feinere Auflösung erzielt. Da jedoch die ersten (multispektralen) Messdaten einen schmaleren Spektralbereich wiedergeben als die zweiten (panchromatischen) Messdaten, kann die örtliche Verteilung in den unterschiedlichen Spektralbereichen verschieden sein. Bevorzugt wird daher, einen oder mehrere der im Folgenden beschriebenen weiteren Verfahrensschritte auszuführen.

In dem Verfahrensschritt gemäß Gliederungspunkt f) wird bei der Übertragung der Verteilung die Verfeinerung vorzugsweise vorgenommen unter Berücksichtigung einer Bilanz von zumindest einem Teil der durch die Messdaten erfassten Strahlungsenergie oder einer Bilanz einer der Strahlungsenergie äquivalenten Größe (z. B. der Strahlungsleistung). Spezieller formuliert schließt die Berücksichtung der Bilanz ein, dass die Auflösung der ersten Messdaten derart verfeinert wird, dass die Bilanz (zumindest annähernd oder bis auf einen akzeptablen Fehler) ausgeglichen ist, d. h. die Summe der in der Bilanz berücksichtigten Terme Null ist bzw. die einander gegenüberstehenden Terme oder Summen von Termen gleich groß sind.

Insbesondere betrachtet die Bilanz die ersten Messdaten, ggf. ergänzt um Daten virtueller erster Messkanäle (siehe unten), einerseits und die zweiten Messdaten andererseits.

Es werden insbesondere lokale Energiebilanzen berücksichtigt, Energiebilanzen über einen Spektralbereich eines oder mehrerer multispektraler Sensoren berücksichtigt, Energiebilanzen über den Spektralbereich des panchromatischen Sensors berücksichtigt und/oder Korrekturen vorgenommen. Wie im Folgenden noch genauer beschrieben wird, können insbesondere aus der Umgebung des örtlichen Teilbereichs Informationen darüber gewonnen werden, wie die Strahldichte, der Reflexionsgrad oder die äquivalente Größe in dem örtlichen Teilbereich verteilt ist bzw. schwankt.

Unter der Berücksichtigung von Energiebilanzen wird auch verstanden, dass die Strahlungsenergie oder Strahlungsleistung in dem jeweiligen örtlichen Bereich oder Wellenlängenbereich erhalten bleibt.

Unter einem örtlichen Teilbereich von Messdaten wird ein Teil des gesamten örtlichen Erfassungsbereichs des jeweiligen Messkanals verstanden. Dabei ist der örtliche Teilbereich insbesondere auf den Ort eines Messsensors bezogen. Unter der Voraussetzung, dass alle auf den Messsensor einfallende und erfasste Strahlung nahezu parallel zueinander einfällt (also keine Querstrahlung berücksichtigt werden muss), ist der örtliche Teilbereich eindeutig einem Teilbereich des insgesamt erfassten Raumwinkelbereichs des Messsensors zugeordnet. Es werden jedoch - wie an anderer Stelle beschrieben ist - von der Erfindung auch Fälle umfasst, bei denen Querstrahlung vorkommen kann und ggf. entsprechende Korrekturen vorgenommen werden.

Vorzugsweise wird die örtliche Auflösung der ersten Messdaten derart verfeinert, dass die Summe der in dem örtlichen Teilbereich von den ersten Messdaten erfassten Strahlungsenergie, Strahlungsleistung oder einer äquivalenten Größe durch die Verfeinerung nicht verändert wird. Insbesondere kann eine entsprechende Energiebilanz in dem Spektralbereich des jeweiligen Messkanals und über den örtlichen Teilbereich erstellt werden. Ohne diese Energiebilanz zu verletzen, kann die Verteilung der Strahldichte, des Reflexionsgrades oder der äquivalenten Strahlungsgröße in dem örtlichen Teilbereich verändert werden. In erster Näherung ist die Verteilung gleich der Verteilung in dem panchromatischen Messkanal.

Vorzugsweise werden die innerhalb des örtlichen Teilbereichs durchgeführten Verfahrensschritte (sowohl die bereits beschriebenen, als auch die noch im Folgenden beschriebenen) für eine Vielzahl der örtlichen Teilbereiche durchgeführt, sodass eine Verfeinerung der örtlichen Auflösung in einem größeren durchgehenden örtlichen Bereich oder für den gesamten örtlichen Erfassungsbereich (beispielsweise gesamte Fernerkundungsszene) erzielt wird.

Besonders bevorzugt wird eine Ausgestaltung des Verfahrens, bei der die verfeinert aufgelöste örtliche Verteilung der ersten Messdaten unter Berücksichtigung der ersten Messdaten der Umgebung des örtlichen Teilbereiches korrigiert wird. Die Umgebung kann insbesondere jeweils für einen der ersten Messkanäle oder jeweils separat für mehrere der ersten Messkanäle berücksichtigt werden. Hintergrund dieser Ausgestaltung ist, dass sich Messwerte (z. B. spektrale Eigenschaften) an den Grenzen eines örtlichen Teilbereiches in der Regel nicht sprungartig ändern. Aus den benachbarten Teilbereichen können daher Informationen darüber gewonnen werden, wie groß der Messwert in der Nähe der Grenze auch innerhalb des örtlichen Teilbereiches ist.

Insbesondere kann die Korrektur für einen ersten Messkanal oder separat für mehrere der ersten Messkanäle durchgeführt werden.

Zusätzlich kann für einen örtlichen Unterbereich des örtlichen Teilbereiches eine Energiebilanz, eine Leistungsbilanz oder eine Bilanz einer äquivalenten Größe der verfeinert aufgelösten ersten Messdaten einerseits und der gemessenen zweiten Messdaten andererseits erstellt werden, wobei eine Abweichung der Bilanzen der verfeinert aufgelösten ersten Messdaten und der gemessenen zweiten Messdaten ermittelt wird. Insbesondere sind die Unterbereiche mit den örtlichen Bereichen von einzelnen oder mehreren Bildelementen (z. B. Pixeln) der zweiten Messdaten identisch. Hierdurch ist eine weitere Kontrolle und/oder Korrekturmöglichkeit gegeben. So kann beispielsweise anhand der Abweichung entschieden werden, ob die verfeinert aufgelöste örtliche Verteilung der ersten Messdaten korrigiert wird. Gegebenenfalls kann die Korrektur wiederholt werden, bis die Abweichung geringer ist als ein vorgegebener Grenzwert.

Im Allgemeinen decken die Spektralbereiche der ersten (multispektralen) Kanäle nicht den gesamten Spektralbereich des zweiten (panchromatischen) Kanals ab. Aus den ersten Kanälen sind also nicht für alle Teil-Spektralbereiche des zweiten Kanals Messwerte vorhanden. Außerdem kann es Überlappungen der Spektralbereiche der ersten Kanäle geben. In einer bevorzugten Ausgestaltung der Erfindung wird daher ein virtueller Zusatzkanal eingeführt bzw. wird eine Mehrzahl von virtuellen Zusatzkanälen eingeführt.

Insbesondere für den Fall, dass der oder die Spektralbereiche der ersten Messkanäle nicht lückenlos, nicht vollständig und mit Überlappung den Spektralbereich des zweiten Messkanals abdecken, wird die folgende Ausgestaltung des Verfahrens vorgeschlagen: Es wird zumindest ein virtueller erster Messkanal eingeführt, der einem der ersten Spektralbereiche zugeordnet ist, wobei der zugeordnete erste Spektralbereich zumindest einen Teil-Spektralbereich des zweiten Spektralbereichs aufweist, in dem sich eine Mehrzahl der ersten Spektralbereiche der ersten Messkanäle überlappen und/oder in dem von keinem der ersten Messkanäle Messdaten vorliegen.

Vorzugsweise deckt der virtuelle erste Messkanal (soweit vorhanden) alle nicht durch die Spektralbereiche der ersten Messkanäle erfassten Spektralbereiche ab, die innerhalb des Spektralbereichs des zweiten Messkanals liegen. Die Teil-Spektralbereiche des Zusatzkanals müssen also nicht zusammenhängen. Weiterhin werden in dem virtuellen ersten Messkanal vorzugsweise (soweit vorhanden) alle einander überlappenden Teilbereiche der Spektralbereiche der ersten Messkanäle berücksichtigt, beispielsweise indem ein entsprechender Betrag in den virtuellen Messwerten des virtuellen Messkanals in Abzug gebracht wird.

Mit Hilfe des Zusatzkanals kann eine vollständige Energiebilanz aufgestellt werden, bei der berücksichtigt wird, dass die in dem zweiten Kanal einfallende Strahlungsenergie gleich der Summe der in den ersten Kanälen einfallenden Strahlungsenergie zuzüglich der in dem Zusatzkanal einfallenden Strahlungsenergie ist. Diese Energiebilanz kann für jede Bildeinheit (z. B. Pixel) der ersten Kanäle aufgestellt werden. Der Begriff "Energiebilanz" steht wiederum stellvertretend für äquivalente Bilanzen, insbesondere eine Leistungsbilanz (also eine Bilanz der pro Zeiteinheit einfallenden Energie).

Aufgrund der Berücksichtigung der Energiebilanz oder der äquivalenten Bilanz können Werte für zumindest einen der Zusatzkanäle berechnet werden und kann daher im Ergebnis zumindest ein in den Spektralbereichen der ersten Messkanäle fehlender Messkanal "rekonstruiert", d.h. simuliert werden. Z. B. gibt es Satelliten, die über keinen multispektralen Sensor im blauen Wellenlängenbereich des sichtbaren Lichts verfügen. Andererseits ist die Detektion von Strahlung im blauen Wellenlängenbereich zum Beispiel für die Detektionen von Aerosolen erforderlich. Der blaue Wellenlängenbereich kann daher z. B. durch einen Zusatzkanal berücksichtigt werden.

Bei einer Variante des erfindungsgemäßen Verfahrens wird zunächst die örtliche Auflösung zumindest eines multispektralen Kanals verfeinert und wird durch Extrapolation zu anderen spektralen Bereichen auch die örtliche Auflösung von weiteren Kanälen verfeinert, deren Spektralbereiche zumindest teilweise außerhalb des Spektralbereiches des panchromatischen Kanals liegen.

Alternativ oder zusätzlich ist es möglich, bei der Verfeinerung der örtlichen Auflösung Daten unterschiedlicher Sensoren und/oder Aufnahmezeitpunkte zu nutzen. So kann beispielsweise für eine Überprüfung und/oder Korrektur der verfeinerten ersten Messdaten Information genutzt werden, die aus den Messdaten desselben Sensors zu einem anderen Zeitpunkt gewonnen wird.

In der Regel ist das beobachtete Gebiet (insbesondere auf der Erdoberfläche) keine ebene Fläche, sodass es zu Reflexion von Strahlung in unterschiedliche Richtungen kommt. Außerdem kann ein Teil der Strahlung, die auf den Messsensor fällt, in dem Raum zwischen dem beobachteten Gebiet und dem Messsensor reflektiert worden sein und quer zur Blickrichtung des Messsensors auf diesen auftreffen. Bei der Beobachtung eines Gebietes im Bereich der Erdoberfläche wird daher das Messergebnis verfälscht. Insbesondere sind Messwerte in einzelnen Bildelementen oder Bildbereichen höher oder niedriger als bei einer Messung ohne solche quer zur Blickrichtung des Messsensors einfallende Strahlung. Es wird daher bevorzugt, zumindest einen dieser Effekte zu korrigieren. Insbesondere kann eine Korrektur unter Verwendung eines topografischen Rechenmodells des beobachteten Gebiets und/oder mit Hilfe eines Rechenmodells der Atmosphäre zwischen dem Messsensor und dem beobachteten Gebiet vorgenommen werden. Beispielsweise ist es möglich, entsprechende Korrekturfaktoren zu ermitteln, die in die genannte Energiebilanz aufgenommen werden und mit denen einzelne Terme der Energiebilanz (beispielsweise die in den einzelnen Kanälen pro Pixel gemessene Strahlungsleistungen) multipliziert werden. Zum Beispiel können Messdaten einer Datenrekonstruktion unterworfen werden, da es (beispielsweise auf Grund von Wolken) unter Umständen unterschiedlich kontaminierte Pixel gibt.

Zusätzlich oder alternativ ist es möglich, auch die Reflexion von gemessener Strahlung zu berücksichtigen, die in dem Raum zwischen dem beobachteten Gebiet und dem Messsensor stattfindet und die in Blickrichtung des Messsensors auf diesen auftrifft. Dabei kann diese Korrektur im Rahmen einer Atmosphärenkorrektur gemeinsam mit der Korrektur der quer zur Blickrichtung des Messsensors auftreffenden Strahlung (Streustrahlung) durchgeführt werden, soweit die Streustrahlung in dem Raum zwischen dem beobachteten Gebiet und dem Messsensor reflektiert wurde. Weitere Korrekturen können bezüglich des Sonnenstandes vorgenommen werden.

Vorzugsweise wird auch ein weiterer Effekt (alternativ oder zusätzlich) berücksichtigt: Der Messsensor ist nicht für Strahlung von jedem Punkt des beobachteten Gebiets gleich empfindlich. Insbesondere sind die Messwerte für ein und dasselbe Bildpixel abhängig davon verschieden, ob die Strahlung überwiegend aus einem zentralen Bereich oder überwiegend aus einem Randbereich derjenigen rechteckigen Teilfläche des beobachteten Gebiets auf den Messsensor fällt, die dem Bildpixel zugeordnet ist. Dieser Effekt kann, insbesondere durch Einführung einer entsprechenden Korrekturfunktion (z. B. einer unter der Bezeichnung Point Spread Function bekannten Funktion), berücksichtigt werden.

Der Erfindung umfasst auch eine Vorrichtung zum Verarbeiten multispektraler Fernerkundungsdaten, wobei die Vorrichtung ausgestaltet ist, durch eine Fernerkundung gewonnene erste Messdaten zumindest eines ersten Messkanals zu verarbeiten und durch eine Fernerkundung gewonnene zweite Messdaten eines zweiten Messkanals zu verarbeiten, wobei zumindest ein erster Spektralbereich, in dem einfallende Strahlung durch die ersten Messdaten erfasst wird und der dem ersten Messkanal oder einem der ersten Messkanäle zugeordnet ist, schmaler ist als ein zweiter Spektralbereich, in dem einfallende Strahlung durch die zweiten Messdaten erfasst wird, wobei der erste Spektralbereich oder die ersten Spektralbereiche vollständig in dem zweiten Spektralbereich enthalten ist oder sind, wobei die zweiten Messdaten örtlich feiner aufgelöst sind als die ersten Messdaten und wobei die Vorrichtung das Folgende aufweist:

- eine Ermittlungseinrichtung, die ausgestaltet ist, eine örtliche Verteilung einer in den zweiten Messdaten erfassten Strahldichte, eines Reflexionsgrades oder einer äquivalenten Strahlungsgröße zu ermitteln, wobei die örtliche Verteilung auf einen örtlichen Bereich oder Teilbereich der zweiten Messdaten beschränkt ist,
- eine Verarbeitungseinrichtung, die ausgestaltet ist, die örtliche Verteilung auf einen entsprechenden örtlichen Bereich oder Teilbereich der ersten Messdaten zu übertragen, sodass die örtliche Auflösung der ersten Messdaten verfeinert wird, wobei von der Verarbeitungseinrichtung insbesondere eine Bilanz von zumindest einem Teil der durch die Messdaten erfassten Strahlungsenergie oder eine Bilanz einer der Strahlungsenergie äquivalenten Größe berücksichtigt wird.

Ferner umfasst die Erfindung ein Computerprogramm zum Verarbeiten multispektraler Fernerkundungsdaten. Das Computerprogramm weist Programmcode-Mittel auf, die ausgestaltet sind, das Verfahren in einer der beschriebenen Ausführungsformen oder Varianten auszuführen. Die Programmcode-Mittel können auf einem computerlesbaren Datenträger gespeichert sein.

Auch gehört zu dem Umfang der Erfindung ein Datenträger oder ein Computersystem, auf dem eine Datenstruktur gespeichert ist, die nach einem Laden in einen Arbeits- und/oder Hauptspeicher eines Computers oder Computer-Netzwerkes das Computerprogramm ausführt.

Das erfindungsgemäße Verfahren kann durch Verwendung von Hardware und/oder Software durchgeführt werden.

Ausführungsbeispiele der Erfindung werden nun unter Bezugnahme auf die beigefügte Zeichnung beschrieben. Die einzelnen Figuren der Zeichnung zeigen:

Fig. 1     ein schematisches Flussdiagramm zur Erläuterung des Zusammenwirkens von Maßnahmen bei der Verfeinerung der Messdaten und

Fig. 2     örtliche Teilbereiche, die sowohl von einem multispektralen Sensor als auch von einem panchromatischen Sensor erfasst wurden.

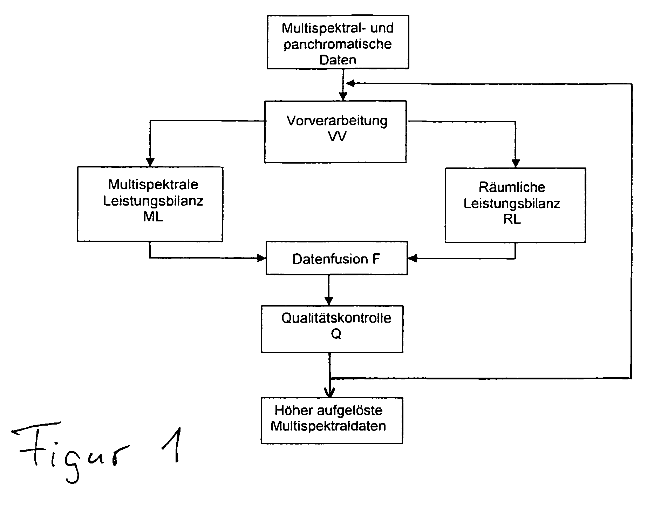

Ein Daten-Prozessor zur Durchführung des erfindungsgemäßen Verfahrens kann, beispielsweise wie in Fig. 1 dargestellt, aufgebaut sein. Dabei ist der Aufbau schematisch im Sinne von funktionalen Einheiten zu verstehen, die der Prozessor aufweist. Insbesondere kann die Reihenfolge der von den einzelnen funktionalen Einheiten ausgeführten Verfahrensschritte anders als in Fig. 1 dargestellt sein. Die einzelnen funktionalen Einheiten können durch Hardware und/oder Software implementiert werden.

Die den funktionalen Einheiten entsprechenden Verfahrensschritte zur automatischen Verfeinerung der geometrischen Auflösung multispektraler Fernerkundungsdaten weisen fünf Hauptprozesse auf, die modular (ein Modul pro Hauptprozess) implementiert sein können. Die Module sind im Einzelnen:

1. die "Vorverarbeitung" (W),
2. die "Multispektrale Leistungsbilanz" (ML),
3. die "Räumliche Leistungsbilanz" (RL)
4. die "Fusionierung" (F) sowie
5. die "Qualitätskontrolle" (Q).

Das Modul W berechnet wahlweise den scheinbaren oder den realen Reflexionswert der Erdoberfläche, d.h. nach Durchführung einer atmosphärischen Korrektur. Die Module multispektrale Leistungsbilanz (ML) und räumliche Leistungsbilanz (RL) können dieselbe Substruktur mit integrierten Submodulen aufweisen.

Das Modul ML dient dem Vergleich der ermittelten Leistungen der multispektralen Kanäle einerseits und des panchromatischen Kanals andererseits, in dem die Reflexionswerte der multispektralen Kanäle dem des panchromatischen Kanals gegenübergestellt werden.

Das Modul RL dient dem räumlichen (örtlichen) Leistungsvergleich, in dem die erfassten örtlichen Bereiche der multispektralen Kanäle denen des panchromatischen Kanals gegenüber gestellt und die jeweiligen Leistungen verglichen werden.

Das Modul "Fusionierung" (F) dient der Zusammenführung der Ergebnisse aus den Modulen ML und RL und der Verbesserung der Anfangslösung durch Iteration. Die physikalischen Grundlagen sind unter dem Punkt "Theoretische Grundlagen" ausführlich dargestellt.

Neben der eigentlichen Verfeinerung der geometrischen Auflösung erfolgt eine Qualitätskontrolle (Q), um das Ergebnis auch rückwirkend/iterativ verbessern zu können. Die Qualitätskontrolle kann beispielsweise gemäß den von Wald et al. (T. Ranchin, L. Wald: "Fusion of High Spatial and Spectral Resolution Images: The ARSIS Concept and Its Implementation". Photogrammetric Engineering and Remote Sensing, Vol. 66, No. 1, pp. 49-61, Jahr 2000) aufgestellten Kriterien durchgeführt werden.

Außerdem ist eine Datenbank vorgesehen, aus der z. B. die multispektralen und panchromatischen Daten ausgelesen werden. Anschließend können die multispektralen Daten verfeinert werden und die verfeinerten Daten wiederum in der Datenbank abgelegt werden. Die Module VV, ML, RL, F und Q können auf die Datenbank (DB) zugreifen. Alternativ oder zusätzlich sind in dieser Datenbank u.a. die Werte für Gain, Offset oder auch Response-Funktion von Sensoren der einzelnen Kanäle abgelegt.

Als Ergebnis liefert das Verfahren einen physikalisch begründeten multitemporalen Datensatz feiner örtlicher Auflösung. Darüber hinaus liefert das Verfahren, je nach spektraler Abdeckung des PAN-Kanals durch die spektralen Kanäle, einen künstlichen Kanal in gleicher geometrischer Auflösung. Die Daten unterschiedlicher Sensoren und/oder unterschiedlicher örtlicher Auflösung können als atmosphärisch korrigierte multispektrale Daten einer Fernerkundungsdatenzeitreihe eingelesen und verarbeitet werden.

Ein wesentlicher Vorteil des erfindungsgemäßen Verfahrens ist der vollständig physikalisch begründete Ansatz. Auf diese Weise kann die örtliche Verfeinerung der zweiten (multispektralen) Messdaten objektiv und unabhängig von subjektiven Wertungen eines Nutzers der Daten durchgeführt werden.

Zur Verbesserung der Qualität bei der Verfeinerung kann bei der abschließenden Qualitätskontrolle (Modul Q) geprüft werden, ob die Genauigkeit der Co-registrierung der multispektralen Sensoren und des panchromatischen Sensors (bzw. der multispektralen und der panchromatischen Messdaten) ausreichend ist. Andernfalls können die Parameter der Co-registrierung iterativ verbessert werden, um einen Rechenprozess zu starten, in dem die verfeinerten Daten erneut berechnet werden.

Ein Ausführungsbeispiel des erfindungsgemäßen Verfahrens wird nun für den Fall von multispektralen Kanälen 1 bis N (N ist eine natürliche Zahl) beschrieben. Da die multispektralen Kanäle den Spektralbereich des panchromatischen Kanals in der Regel nicht vollständig, lückenlos und ohne Überlappung abdecken, wird ein entsprechender Betrag des auf die multispektralen Sensoren einfallenden oder korrigierten Strahlungsflusses $\Phi_{S_{N+1}}$ einem zusätzlichen virtuellen Kanal mit der Ordnungszahl $N + 1$ zugeschrieben. Die vollständige Bilanz der Strahlungsflüsse auf den panchromatischen Sensor und auf die multispektralen Sensoren kann daher folgendermaßen ausgedrückt werden

$$\Phi_{PAN} = \left( \sum_{i=1}^{N} \Phi_{S_i} \right) + \Phi_{S_{N+1}} \, ,$$

wobei $\Phi_{PAN}$ den auf den panchromatischen Sensor einfallenden oder korrigierten Strahlungsfluss bezeichnet, $\Phi_{S_i}$ den auf den jeweiligen multispektralen Sensor einfallenden oder korrigierten Strahlungsfluss. Die einzelnen Strahlungsflüsse können zwischen 0 und 1 normiert und die abgeleiteten Gewichte $G$ eingeführt werden:

$$G_{PAN} * \dot{\rho}_{PAN} = \left( \sum_{i=1}^{N} G_{S_i} * \dot{\rho}_{S_i} \right) + G_{N+1} * \dot{\rho}_{S_{N+1}}$$

Dabei bezeichnen $\dot{\rho}_{PAN}$ den Reflexionsgrad der Messdaten des panchromatischen Sensors, $\rho_{Si}$ den Reflexionsgrad der Messdaten des jeweiligen multispektralen Sensors und $\dot{\rho}_{S_{N+1}}$ den Reflexionsgrad der virtuellen Messdaten des virtuellen Messkanals, wobei die Reflexionsgrade auf die auf das beobachtete Gebiet momentan einfallende solare Strahlung bezogen sind, mit:

$$G_{PAN} = \Phi_{PAN} / \Phi_{PAN} = 1$$

$$G_{S_i} = \Phi_{S_i} / \Phi_{PAN}$$

$$G_{N+1} = \Phi_{N+1} / \Phi_{PAN}$$

Der Reflexionswert $\overset{\bullet}{\rho}_{PAN}$ des panchromatischen Kanals kann dabei auf eine Anzahl von Bildelementen (Pixeln) bezogen werden, die höher ist als die Anzahl der entsprechenden Reflexionsfläche der multispektralen Kanäle, da gleich große Reflexionsflächen betrachtet werden sollen. Beispielsweise entspricht bei gleicher betrachteter Reflexionsfläche ein Bildelement (Pixel) der multispektralen Kanäle einer Anzahl von M Pixeln des panchromatischen Kanals. Es können jedoch auch größere Reflexionsflächen betrachtet werden, die mehr als ein Pixel der multispektralen Kanäle aufweisen.

Um die Verfeinerung der geometrischen Auflösung der einzelnen Spektralkanäle zu erzielen, werden für die betrachtete Reflexionsfläche die örtlichen Beiträge $w_j$ der Strahlungsbeiträge der M Pixel des panchromatischen Kanals errechnet.

$$w_j = \frac{\overset{\bullet}{\rho}_{PAN,j}}{M * \overset{\bullet}{\overline{\rho}}_{PAN}}$$

Die Summe der Beiträge $w_j$ über alle j (j = 1 ... M) Teilflächen bzw. Pixel ist gleich 1.

Tabelle 1: Beiträge der einzelnen Pixel zu der einfallenden Strahlung eines betrachteten örtlichen Teilbereichs für den Fall M = 4

| | |
|---|---|
| $w_1 = \dfrac{P_1}{4 * PAN}$ | $w_2 = \dfrac{P_2}{4 * PAN}$ |
| $w_3 = \dfrac{P_3}{4 * PAN}$ | $w_4 = \dfrac{P_4}{4 * PAN}$ |

Für den Fall M = 4, d. h. 4 Pixel in einer betrachteten Reflexionsfläche, ist in Tabelle 1 die örtliche Verteilung der Beiträge $w_j$ wiedergegeben. Dabei steht P für $\overset{\bullet}{\rho}_{PAN,j}$ und PAN für den über die gesamte betrachtete Reflexionsfläche ermittelten Reflexionsgrad $\overset{\bullet}{\overline{\rho}}_{PAN}$.

In einem ersten Schritt der Verfeinerung der örtlichen Auflösung der multispektralen Kanäle (einschließlich des virtuellen multispektralen Kanals) wird nun die örtliche Verteilung der Beiträge $w_j$ unverändert auf die einzelnen multispektralen Kanäle übertragen, und zwar vorzugsweise über die gesamte, sowohl von den multispektralen Kanälen als auch von dem panchromatischen Kanal erfasste Fläche bzw. Gebiet. Die genannte Operation der Übertragung der Verteilung der Beiträge $w_j$ wird daher für eine Vielzahl aneinander angrenzender örtlicher Teilbereiche durchgeführt. Im Ergebnis liegen bereits nach Ausführung dieses Verfahrensschritts unter exakter Einhaltung aller Bilanzen verfeinert aufgelöste multispektrale Messdaten vor.

Vorzugsweise wird anschließend eine Korrektur der Verteilung vorgenommen, wobei jeweils einzeln für einen betrachteten örtlichen Teilbereich und jeweils separat für die einzelnen multispektralen Kanäle (einschließlich des virtuellen Kanals) Messdaten aus der örtlichen Umgebung des betrachteten Teilbereichs verwendet werden. Die Korrektur ist sinnvoll, da das Spektrum der auf die Sensoren einfallenden Strahlung in der Regel objektbedingt von Ort zu Ort variiert. Daher trifft die aus dem panchromatischen Kanal berechnete Verteilung der Beiträge $w_j$ nicht exakt für die einzelnen multispektralen Kanäle zu.

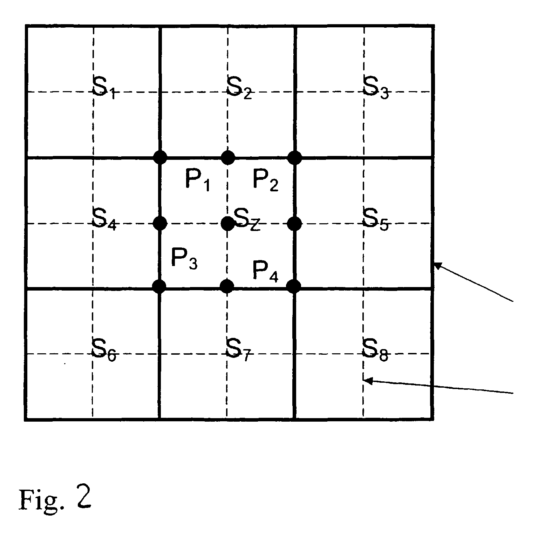

Unter Bezugnahme auf das in Fig. 2 dargestellte spezielle Beispiel wird nun das Prinzip der Berücksichtigung der Umgebungsinformationen erläutert. Fig. 2 zeigt eine sowohl von dem panchromatischen Sensor als auch von den multispektralen Sensoren erfasste Fläche bzw. ein erfasstes Gebiet, aus dem Strahlung auf die Sensoren einfällt. Die breiten geraden Linien bezeichnen die Grenzlinien zwischen den betrachteten örtlichen Teilgebieten. In dem Beispiel sind somit neun betrachtete Teilgebiete vorhanden. Jedes der Teilgebiete entspricht beispielsweise lediglich einem Pixel (Bildelement) der multispektralen Kanäle, entspricht jedoch gleichzeitig einer Mehrzahl von Pixeln (im Beispiel vier Pixeln) des panchromatischen Kanals. Im Beispiel sind die Grenzlinien zwischen den Pixeln der multispektralen Sensoren durch unterbrochene gerade Linien und durch die breiten geraden Linien dargestellt.

Für das zentral gelegene Teilgebiet sind die Eckpunkte aller Pixel (bzw. der zugeordneten Untergebiete des zentralen Teilgebiets) mit Punkten dargestellt, insgesamt also neun Punkte.

Wird nun angenommen, dass sich die in jedem der multispektralen Kanäle einfallende Strahlung nicht sprungartig an den Grenzlinien bzw. an den Eckpunkten ändert, können daraus Informationen über die örtliche Verteilung der gemessenen Strahlung in dem betrachteten Teilgebiet abgeleitet werden. Allgemein formuliert, kann dabei jede beliebige vorhandene Information über die örtliche Abhängigkeit der Messdaten in dem jeweiligen multispektralen Kanal verwendet werden. Beispielsweise können lokale partielle Ableitungen der Messdaten berechnet und verwendet werden. Dabei können auch nicht nur Messwerte der unmittelbar an das betrachtete Teilgebiet angrenzenden Teilgebiete berücksichtigt werden, sondern auch Messwerte von weiter entfernt liegenden Teilgebieten. In dem anhand von Fig. 2 erläuterten Beispiel jedoch werden nur die Messwerte desselben multispektralen Kanals berücksichtigt, die Teilgebieten zugeordnet sind, die unmittelbar an das betrachtete Teilgebiet angrenzen.

Für das Pixel $P_1$ in dem in Fig. 2 dargestellten Fall wird nun ein Beispiel der Berücksichtigung der Umgebung näher erläutert. Die Messwerte der multispektralen Kanäle, beispielsweise die Reflexionsgrade $\overline{\rho}_{S_i}^{\bullet}$ für den multispek-tralen Kanal i, sind in Fig. 2 der Einfachheit halber mit S bezeichnet. Der jeweilige Index bezeichnet dabei die Nummer oder den Buchstaben des jeweiligen örtlichen Teilgebiets. Dabei steht der Buchstabe z für das betrachtete zentrale Teilgebiet und die acht umgebenden, unmittelbar benachbarten Teilgebiete sind mit den Indizes 1 bis 8 bezeichnet.

Für das Pixel $P_1$ des panchromatischen Kanals kann folgende Gleichung zur Korrektur des Beitrages $w_j$ mit $j$ = 1 abgeleitet werden:

$$\rho_{S_i,j=1}^{\bullet} = \frac{S_1 + S_2 + S_4 + S_z}{4} + \frac{S_2 + S_z}{2} + S_z + \frac{S_4 + S_z}{2}$$

oder

$$\rho_{S_i,j=1}^{\bullet} = \frac{S_1 + 3S_2 + 3S_4 + 9S_z}{4}$$

wobei sich die vier Einzelbeträge der ersten Gleichung aus der Gewichtung der $S_i$ an den Eckpunkten von P1 ergeben.

Die entsprechenden Gleichungen für die anderen Untergebiete lauten:

für $P_2$:

$$\rho_{S_i,j=2}^{\bullet} = \frac{S_3 + 3S_2 + 3S_5 + 9S_z}{4}$$

für $P_3$:

$$\rho_{S_i,j=3}^{\bullet} = \frac{S_6 + 3S_7 + 3S_4 + 9S_z}{4}$$

für $P_4$:

$$\rho^{\bullet}_{S_i, j=4} = \frac{S_8 + 3S_5 + 3S_7 + 9S_{\bar{z}}}{4}$$

Entsprechend vereinfachen sich die Formeln sowohl für betrachtete Teilgebiete am Rand als auch an den Ecken des insgesamt erfassten Gebiets.

Allgemeiner formuliert werden die benachbarten Teilgebiete und das betrachtete Teilgebiet unterschiedlich gewichtet und werden für jedes der Untergebiete des betrachteten Teilgebiets den unterschiedlichen Gewichten entsprechende Messwerte des verfeinert aufgelösten multispektralen Kanals berechnet oder die bereits vorhandenen verfeinert aufgelösten Werte des multispektralen Kanals korrigiert.

Vorzugsweise bleibt dabei die örtliche Energiebilanz über das betrachtete Teilgebiet innerhalb des multispektralen Kanals erhalten, wird also nicht verändert. Anders ausgedrückt: die Summe der Strahlungsbeiträge der Untergebiete (der verfeinerten Pixel) ist gleich dem tatsächlich gemessenen Strahlungsbeitrag des gesamten betrachteten Teilgebiets. Insbesondere wird unter Berücksichtigung der für die einzelnen Untergebiete berechneten Strahlungsbeiträge (bzw. Reflexionsgrade) das Gewicht bzw. der Anteil ermittelt, welches bzw. welchen die einzelnen Untergebiete an dem gesamten betrachteten Teilgebiet haben.

Dennoch findet durch die Berücksichtigung der umgebenden Teilgebiete eine örtliche Umverteilung der Strahlungsbeiträge statt. Dies kann, anders ausgedrückt, durch Energieüberträge über die Grenzen der Untergebiete ausgedrückt werden. Wird jedoch die Energiebilanz innerhalb des betrachteten Teilgebiets erhalten, finden keine Energieüberträge über die Grenzen des betrachteten Teilgebiets statt.

Zur Korrektur und/oder zur Qualitätskontrolle wird vorzugsweise eine weitere Energiebilanz berücksichtigt, nämlich für jedes Einzelne der Untergebiete. Dabei wird geprüft, ob die Summe der Strahlungsbeiträge aller multispektralen Kanäle (einschließlich des virtuellen Kanals) gleich dem Strahlungsbeitrag des panchromatischen Kanals ist. Durch Einführung des virtuellen Kanals ergaben sich vor der Durchführung der Verfeinerung keine Unterschiede. Auf Grund der Energieüberträge über die Grenzen der Untergebiete kann es jedoch zu einer Störung der Energiebilanz gekommen sein.

Als Maß für die Qualität kann nun beispielsweise bestimmt werden, ob und gegebenenfalls wie stark die Energiebilanz gestört wurde. Beispielsweise kann ein Grenzwert der Energie vorgegeben werden, um die die Energiebilanz maximal gestört sein darf. Wird der Grenzwert erreicht oder überschritten, ist eine Korrektur erforderlich. Die Korrektur wird insbesondere durch wiederholtes (iteratives) Durchführen der Verfeinerung, wie oben beschrieben, angebracht.

Da nun verfeinerte Messwerte der multispektralen Kanäle vorliegen, kann bei einer Variante des Verfahrens die verfeinerte Ortsauflösung in den zu dem betrachteten Teilgebiet benachbarten Teilgebieten berücksichtigt werden.

Das erfindungsgemäße Verfahren und insbesondere das anhand der Figuren beschriebene Ausführungsbeispiel können z. B. im Fall eines Satelliten angewendet werden, der einen so genannten Hyperspektralsensor und mehrere panchromatische Sensoren aufweist. Ein Hyperspektralsensor kann als ein Spezialfall von multispektralen Sensoren betrachtet werden. Er liefert Messwerte in einer Vielzahl von Messkanälen, z. B. in 240 Messkanälen. In diesem Fall ist die von dem Satelliten zu einer Bodenstation zu übertragende Datenmenge bereits sehr groß. Es wird daher bevorzugt, dass die örtliche Auflösung erst nach dem Empfang der Daten von der Bodenstation verfeinert wird.

Z. B. weist der Satellit drei panchromatische Sensoren auf, einen im sichtbaren Wellenlängenbereich, einen im nahen Infrarot (NIR) und einen im mittleren Infrarot (MIR). Dabei liegen jeweils zumindest einige der Messkanäle des Hyperspektralsensors in den drei durch die panchromatischen Sensoren abgedeckten Wellenlängenbereichen. Nach dem Empfang der Messdaten von der Bodenstation wird jeweils in den drei von den panchromatischen Sensoren erfassten Spektralbereichen eine Verfeinerung der örtlichen Auflösung in den Messkanälen des Hyperspektralsensors vorgenommen, z. B. von 6 m Auflösung auf 3 m Auflösung verfeinert.

**Patentansprüche**

1. Verfahren zum Verarbeiten multispektraler Fernerkundungsdaten, wobei

 a) durch Fernerkundung gewonnene erste Messdaten zumindest eines ersten Messkanals verwendet werden,
 b) durch Fernerkundung gewonnene zweite Messdaten eines zweiten Messkanals verwendet werden,
 c) zumindest ein erster Spektralbereich, in dem einfallende Strahlung durch die ersten Messdaten erfasst wird und der dem ersten Messkanal oder einem der ersten Messkanäle zugeordnet ist, schmaler ist als ein zweiter Spektralbereich, in dem einfallende Strahlung durch die zweiten Messdaten erfasst wird,
 d) der erste Spektralbereich oder die ersten Spektralbereiche vollständig in dem zweiten Spektralbereich enthalten ist oder sind (VV),

e) die zweiten Messdaten örtlich feiner aufgelöst sind als die ersten Messdaten,

f) in einem örtlichen Bereich oder Teilbereich der zweiten Messdaten eine örtliche Verteilung einer in den zweiten Messdaten erfassten Strahldichte, eines Reflexionsgrades oder einer äquivalenten Strahlungsgröße ermittelt wird (ML, RL) und auf einen entsprechenden örtlichen Bereich oder Teilbereich der ersten Messdaten übertragen wird (F), sodass die örtliche Auflösung der ersten Messdaten verfeinert wird,

g) wobei die örtliche Auflösung der ersten Messdaten derart unter Berücksichtigung einer Bilanz von zumindest einem Teil der durch die Messdaten erfassten Strahlungsenergie, Strahlungsleistung oder einer Bilanz einer der Strahlungsenergie äquivalenten Größe (ML, RL) verfeinert wird, dass die Summe der in dem örtlichen Teilbereich von den ersten Messdaten erfassten Strahlungsenergie, Strahlungsleistung oder der äquivalenten Größe durch die Verfeinerung nicht verändert wird (F),

h) Messwerte aus einer Umgebung eines örtlichen Teilbereichs der ersten Messdaten dazu genutzt werden, eine Verteilung der durch die Messdaten innerhalb des örtlichen Teilbereichs erfassten Größe zu berechnen wobei die verfeinert aufgelöste örtliche Verteilung der ersten Messdaten unter Berücksichtigung von ersten Messdaten der Umgebung des örtlichen Teilbereiches korrigiert wird (Q), so dass durch die Verfeinerung an der Grenze des örtlichen Teilbereichs entstandene oder ohne die Nutzung der Messwerte aus der Umgebung entstehende sprungartige Änderungen der erfassten Größe reduziert werden, wobei die örtliche Bilanz über das Teilgebiet erhalten bleibt.

2. Verfahren nach dem vorhergehenden Anspruch, wobei die Bilanz die ersten Messdaten, ggf. ergänzt um Daten virtueller erster Messkanäle, einerseits und die zweiten Messdaten andererseits betrachtet (ML, RL).

3. Verfahren nach einem der vorhergehenden Ansprüche, wobei bei der Verfeinerung der örtlichen Auflösung eine räumliche Energiebilanz und/oder Leistungsbilanz unter Nutzung von Messwerten des zweiten Messkanals und eine spektrale Energiebilanz und/oder Leistungsbilanz unter Nutzung von Messwerten einer Mehrzahl der ersten Messkanäle berücksichtigt werden.

4. Verfahren nach dem vorhergehenden Anspruch, wobei die Korrektur für einen ersten Messkanal oder separat für mehrere der ersten Messkanäle durchgeführt wird (Q).

5. Verfahren nach einem der vorhergehenden Ansprüche, wobei für einen örtlichen Unterbereich des örtlichen Teilbereiches eine Energiebilanz, eine Leistungsbilanz oder eine Bilanz einer äquivalenten Größe der verfeinert aufgelösten ersten Messdaten einerseits und der gemessenen zweiten Messdaten andererseits erstellt wird, und wobei eine Abweichung der Bilanzen der verfeinert aufgelösten ersten Messdaten und der gemessenen zweiten Messdaten ermittelt wird (Q).

6. Verfahren nach dem vorhergehenden Anspruch, wobei anhand der Abweichung entschieden wird, ob die verfeinert aufgelöste örtliche Verteilung der ersten Messdaten korrigiert wird (Q).

7. Verfahren nach einem der beiden vorhergehenden Ansprüche, wobei bei einer Abweichung die auf den entsprechenden örtlichen Teilbereich der ersten Messdaten übertragene örtliche Verteilung korrigiert wird (Q).

8. Verfahren nach dem vorhergehenden Anspruch, wobei die Korrektur ggf. wiederholt wird, bis die Abweichung geringer ist als ein vorgegebener Grenzwert (Q).

9. Verfahren nach einem der vorhergehenden Ansprüche, wobei ein virtueller erster Messkanal eingeführt wird, der einem der ersten Spektralbereiche zugeordnet ist, wobei der zugeordnete erste Spektralbereich zumindest einen Teil-Spektralbereich des zweiten Spektralbereichs aufweist, in dem sich eine Mehrzahl der ersten Spektralbereiche der ersten Messkanäle überlappen und/oder in dem von keinem der ersten Messkanäle Messdaten vorliegen (ML).

10. Vorrichtung zum Verarbeiten multispektraler Fernerkundungsdaten, wobei die Vorrichtung ausgestaltet ist, durch eine Fernerkundung gewonnene erste Messdaten zumindest eines ersten Messkanals zu verarbeiten und durch eine Fernerkundung gewonnene zweite Messdaten eines zweiten Messkanals zu verarbeiten, wobei zumindest ein erster Spektralbereich, in dem einfallende Strahlung durch die ersten Messdaten erfasst wird und der dem ersten Messkanal oder einem der ersten Messkanäle zugeordnet ist, schmaler ist als ein zweiter Spektralbereich, in dem einfallende Strahlung durch die zweiten Messdaten erfasst wird, wobei der erste Spektralbereich oder die ersten Spektralbereiche vollständig in dem zweiten Spektralbereich enthalten ist oder sind (VV), wobei die zweiten Messdaten örtlich feiner aufgelöst sind als die ersten Messdaten und wobei die Vorrichtung das Folgende aufweist:

• eine Ermittlungseinrichtung (ML, RL), die ausgestaltet ist, eine örtliche Verteilung einer in den zweiten Messdaten erfassten Strahldichte, eines Reflexionsgrades oder einer äquivalenten Strahlungsgröße zu ermitteln, wobei die örtliche Verteilung auf einen örtlichen Bereich oder Teilbereich der zweiten Messdaten beschränkt ist,

• eine Verarbeitungseinrichtung (F), die ausgestaltet ist, die örtliche Verteilung auf einen entsprechenden örtlichen Bereich oder Teilbereich der ersten Messdaten zu übertragen, sodass die örtliche Auflösung der ersten Messdaten verfeinert wird, wobei von der Verarbeitungseinrichtung

- die örtliche Auflösung der ersten Messdaten derart unter Berücksichtigung einer Bilanz von zumindest einem Teil der durch die Messdaten erfassten Strahlungsenergie, Strahlungsleistung oder einer Bilanz einer der Strahlungsenergie äquivalenten Größe (ML, RL) verfeinert wird, dass die Summe der in dem örtlichen Teilbereich von den ersten Messdaten erfassten Strahlungsenergie, Strahlungsleistung oder der äquivalenten Größe durch die Verfeinerung nicht verändert wird (F),

- Messwerte aus einer Umgebung eines örtlichen Teilbereichs der ersten Messdaten dazu genutzt werden, eine Verteilung der durch die Messdaten innerhalb des örtlichen Teilbereichs erfassten Größe zu berechnen wobei die verfeinert aufgelöste örtliche Verteilung der ersten Messdaten unter Berücksichtigung von ersten Messdaten der Umgebung des örtlichen Teil-bereiches korrigiert wird (Q), so dass durch die Verfeinerung an der Grenze des örtlichen Teilbereichs entstandene oder ohne die Nutzung der Messwerte aus der Umgebung entstehende sprungartige Änderungen der erfassten Größe reduziert werden, wobei die örtliche Bilanz über das Teilgebiet erhalten bleibt.

11. Computerprogramm zum Verarbeiten multispektraler Fernerkundungsdaten mit Programmcode-Mitteln, die ausgestaltet sind, das Verfahren gemäß einem der Ansprüche 1 bis 9 auszuführen.

12. Computerprogramm mit Programmcode-Mitteln gemäß dem vorhergehenden Anspruch, die auf einem computerlesbaren Datenträger gespeichert sind.

13. Datenträger oder Computersystem, auf dem eine Datenstruktur gespeichert ist, die nach einem Laden in einen Arbeits- und/oder Hauptspeicher eines Computers oder Computer-Netzwerkes das Computerprogramm nach Anspruch 11 oder 12 ausführt.

**Claims**

1. Method of processing multispectral remote reconnaissance data, wherein

a) first measurement data from at least one first measuring channel, which are obtained by remote reconnaissance, are used,

b) second measurement data from a second measuring channel, which are obtained by remote reconnaissance, are used,

c) at least one first spectral region, in which incident radiation is detected through the first measurement data, and which region is associated with the first measuring channel or with one of the first measuring channels, is narrower than a second spectral region, in which incident radiation is detected through the second measurement data,

d) the first spectral region or the first spectral regions is or are fully contained in the second spectral region (VV),

e) the second measurement data are locally resolved more finely than the first measurement data,

f) in a local region or partial region of the second measurement data, a local distribution of a beam density, detected in the second measurement data, a degree of reflection or an equivalent radiation parameter, is determined (ML, RL), and is transferred to a corresponding local region or partial region of the first measurement data (F), so that the local resolution of the first measurement data is refined,

g) the local resolution of the first measurement data being refined by taking account of a balance from at least one part of the radiated energy, radiated power, detected through the measurement data, or a balance of one parameter (ML, RL), equivalent to the radiated energy, in such a manner that the sum of the radiated energy, radiated power, detected in the local partial region from the first measurement data, or of the equivalent parameter, is not changed by the refinement (F), and

h) measurement values from a surrounding area of a local partial region of the first measurement data are used to calculate a distribution of the parameter, detected through the measurement data within the local partial region, the local distribution of the first measurement data, resolved in a refined manner, being corrected by taking account of first measurement data of the surrounding area of the local partial region (Q), so that irregular changes in the detected parameter, caused by the refinement at the boundary of the local partial region or being caused without the use of the measurement values from the surrounding area, are reduced, the local balance being maintained over the partial zone.

2. Method according to the preceding claim, wherein the balance considers the first measurement data, possibly supplemented by data of virtual first measuring channels, on the one hand, and the second measurement data, on the other hand (ML, RL).

3. Method according to one of the preceding claims, wherein, for the refinement of the local resolution, a spatial energy balance and/or power balance are or is taken into consideration by using measurement values of the second measuring channel, and a spectral energy balance and/or power balance are or is taken into consideration by using measurement values of a plurality of the first measuring channels.

4. Method according to the preceding claim, wherein the correction for a first measuring channel or separately for a plurality of the first measuring channels is carried out (Q).

5. Method according to one of the preceding claims, wherein, for a local lower region of the local partial region, an energy balance, a power balance or a balance of an equivalent parameter of the first measurement data, resolved in a refined manner, on the one hand, and of the measured second measurement data, on the other hand, is generated, and wherein a difference between the balances of the first measurement data, resolved in a refined manner, and of the measured second measurement data is determined (Q).

6. Method according to the preceding claim, wherein, with reference to the difference, a decision is made as to whether the local distribution of the first measurement data, resolved in a refined manner, is corrected (Q).

7. Method according to one of the two preceding claims, wherein, in the event of a difference, the local distribution, transferred to the corresponding local partial region of the first measurement data, is corrected (Q).

8. Method according to the preceding claim, wherein the correction is possibly repeated until the difference is smaller than a prescribed limit value (Q).

9. Method according to one of the preceding claims, wherein a virtual first measuring channel is introduced, which is associated with one of the first spectral regions, the associated first spectral region having at least one partial spectral region of the second spectral region, in which a plurality of the first spectral regions of the first measuring channels overlap one another and/or in which there are no measurement data from any of the first measuring channels (ML).

10. Apparatus for processing multispectral remote reconnaissance data, wherein the apparatus is designed to process first measurement data from at least one first measuring channel, which are obtained by a remote reconnaissance, and to process second measurement data from a second measuring channel, which are obtained by a remote reconnaissance, wherein at least one first spectral region, in which incident radiation is detected through the first measurement data, and which region is associated with the first measuring channel or with one of the first measuring channels, is narrower than a second spectral region, in which incident radiation is detected through the second measurement data, wherein the first spectral region or the first spectral regions is or are fully contained in the second spectral region (W), wherein the second measurement data are locally resolved more finely than the first measurement data, and wherein the apparatus has the following:

• a determining means (ML, RL), which is designed to determine a local distribution of a beam density, detected in the second measurement data, a degree of reflection or an equivalent radiation parameter, wherein the local distribution is restricted to a local region or partial region of the second measurement data,
• a processing means (F), which is designed to transfer the local distribution to a corresponding local region or partial region of the first measurement data, so that the local resolution of the first measurement data is refined, wherein

- the local resolution of the first measurement data is refined by the processing means, by taking account of a balance from at least one part of the radiated energy, radiated power, detected through the measurement data, or a balance of one parameter (ML, RL), equivalent to the radiated energy, in such a manner that the sum of the radiated energy, radiated power, detected in the local partial region from the first measurement data, or of the equivalent parameter, is not changed by the refinement (F), and

- measurement values from a surrounding area of a local partial region of the first measurement data are used to calculate a distribution of the parameter, detected through the measurement data within the local partial region, the local distribution of the first measurement data, resolved in a refined manner, being corrected by taking account of first measurement data of the surrounding area of the local partial region (Q), so that irregular changes in the detected parameter, caused by the refinement at the boundary of the local partial region or being caused without the use of the measurement values from the surrounding area, are reduced, the local balance being maintained over the partial zone.

**11.** Computer program for processing multispectral remote reconnaissance data and program code means which are designed to accomplish the method according to one of claims 1 to 9.

**12.** Computer program having program code means according to the preceding claim, which means are stored on a computer-readable data carrier.

**13.** Data carrier or computer system, on which a data structure is stored, which structure accomplishes the computer program according to claim 11 or 12 after being loaded into a working and/or main storage unit of a computer or computer network.

**Revendications**

**1.** Procédé pour le traitement de données de télédétection multispectrale, sachant que

a) des premières données de mesure, acquises par télédétection, d'au moins un premier canal de mesure sont utilisées,
b) des secondes données de mesure, acquises par télédétection, d'au moins un second canal de mesure sont utilisées,
c) au moins un premier domaine spectral, dans lequel un rayonnement incident est calculé au moyen des premières données de mesure et qui est affecté au premier canal de mesure ou à l'un des premiers canaux de mesure, est plus étroit qu'un second domaine spectral, dans lequel un rayonnement incident est calculé au moyen des secondes données de mesure,
d) le premier domaine spectral ou les premiers domaines spectraux est ou sont complètement compris dans le second domaine spectral (VV),
e) les secondes données de mesure sont résolues localement de manière plus fine que les premières données de mesure,
f) dans un domaine local ou une partie d'un domaine local des secondes données de mesure, on calcule une distribution locale d'une luminance énergétique obtenue dans les secondes données de mesure, d'un coefficient de réflexion ou d'une grandeur énergétique équivalente (ML, RL) et on la transmet à un domaine local ou une partie d'un domaine local correspondant des premières données de mesure (F), de sorte que la résolution locale des premières données de mesure est améliorée.
g) sachant que la résolution locale des premières données de mesure est améliorée de telle sorte que, en tenant compte d'un bilan d'au moins une partie de l'énergie et de la puissance de rayonnement obtenues au moyen des données de mesure, ou d'un bilan d'une grandeur équivalente à l'énergie de rayonnement (ML, RL), la somme de l'énergie et de la puissance de rayonnement obtenues par les premières données de mesure dans la partie du domaine local ou de la grandeur équivalente n'est pas modifiée par l'amélioration (F),
h) des valeurs de mesure en provenance d'un environnement d'une partie d'un domaine local des premières données de mesure sont utilisées pour calculer une distribution de la grandeur obtenue au moyen des données de mesure à l'intérieur de la partie du domaine local, sachant que la distribution locale résolue améliorée des premières données de mesure est corrigée en tenant compte des premières données de mesure de l'environnement de la partie du domaine local (Q), de sorte que les modifications soudaines de la grandeur obtenue occasionnées au moyen de l'amélioration à la limite de la partie du domaine local ou se produisant sans l'utilisation des valeurs de mesure en provenance de l'environnement, sont réduites, sachant que le bilan local sur le secteur est maintenu.

**2.** Procédé selon la revendication précédente, sachant que le bilan prend en compte d'une part les premières données de mesure, le cas échéant constituées par les données des premiers canaux de mesure virtuels, et d'autre part les secondes données de mesure (ML, RL).

3. Procédé selon l'une des revendications précédentes, sachant que lors de l'amélioration de la résolution locale, on prend en compte un bilan énergétique et/ou un bilan de puissance spatial(aux) par utilisation des valeurs de mesure du second canal de mesure et un bilan énergétique et/ou un bilan de puissance spectral(aux) par utilisation des valeurs de mesure de la majeure partie des premiers canaux de mesure.

4. Procédé selon la revendication précédente, sachant que la correction d'un premier canal de mesure ou séparément de plusieurs des premiers canaux de mesure est effectuée (Q).

5. Procédé selon l'une des revendications précédentes, sachant que pour un sous-domaine local de la partie du domaine local un bilan énergétique, un bilan de puissance ou un bilan d'une grandeur équivalente des premières données de mesure résolues de manière améliorée d'une part et des secondes données de mesure mesurées d'autre part est produit, et sachant qu'une divergence des bilans des premières données de mesure résolues de manière améliorée et des secondes données de mesure mesurées est déterminé (Q).

6. Procédé selon l'une des revendications précédentes, sachant qu'en s'appuyant sur la divergence on décide si la distribution locale résolue de manière améliorée des premières données de mesure doit être corrigée (Q).

7. Procédé selon l'une des deux revendications précédentes, sachant qu'en cas de divergence, la distribution locale transmise à la partie du domaine local correspondant des premières données de mesure est corrigée (Q).

8. Procédé selon la revendication précédente, sachant que la correction le cas échéant est répétée jusqu'à ce que la divergence soit inférieure à une valeur limite fixée à l'avance (Q).

9. Procédé selon l'une des revendications précédentes, sachant qu'un premier canal de mesure virtuel est installé qui est affecté à l'un des premiers domaines spectraux, sachant que le premier domaine spectral affecté comporte au moins une partie de domaine spectral du second domaine spectral, dans lequel la majeure partie des premiers domaines spectraux des premiers canaux de mesure se chevauchent et/ou dans lequel se trouvent des données de mesure n'appartenant à aucun des premiers canaux de mesure (ML).

10. Dispositif pour le traitement de données de télédétection multispectrale, sachant que le dispositif est développé pour traiter des premières données de mesure, acquises par télédétection, d'au moins un premier canal de mesure, et pour traiter des secondes données de mesure, acquises par télédétection, d'un second canal de mesure, sachant qu'au moins un premier domaine spectral, dans lequel un rayonnement incident est obtenu au moyen des premières données de mesure et qui est affecté au premier canal de mesure ou à l'un des premiers canaux de mesure, est plus étroit qu'un second domaine spectral, dans lequel un rayonnement incident est obtenu au moyen des secondes données de mesure, sachant que le premier domaine spectral ou les premiers domaines spectraux est ou sont complètement compris dans le second domaine spectral (VV), sachant que les secondes données de mesure sont résolues localement de manière plus fine que les premières données de mesure et sachant que le dispositif comprend les éléments suivants :

  • un dispositif de calcul (ML, RL) qui est développé pour calculer une distribution locale d'une luminance énergétique obtenue dans les secondes données de mesure, d'un coefficient de réflexion ou d'une grandeur énergétique équivalente, sachant que la distribution locale est limitée à un domaine ou une partie du domaine local des secondes données de mesure,
  • un dispositif de traitement (F) qui est développé pour transmettre la distribution locale à un domaine ou une partie du domaine local correspondant des premières données de mesure, de sorte que la résolution locale des premières données de mesure est améliorée, sachant qu'avec le dispositif de traitement

    - la résolution locale des premières données de mesure est améliorée de telle sorte que, en tenant compte d'un bilan d'au moins une partie de l'énergie et de la puissance de rayonnement obtenues au moyen des données de mesure, ou d'un bilan d'une grandeur équivalente à l'énergie de rayonnement (ML, RL), la somme de l'énergie et de la puissance de rayonnement obtenues par les premières données de mesure dans la partie du domaine local ou de la grandeur équivalente n'est pas modifiée par l'amélioration (F),
    - des valeurs de mesure en provenance d'un environnement d'une partie d'un domaine local des premières données de mesure sont utilisées pour calculer une distribution de la grandeur obtenue au moyen des données de mesure à l'intérieur de la partie du domaine local, sachant que la distribution locale résolue de manière améliorée des premières données de mesure est corrigée en tenant compte des premières données de mesure de l'environnement de la partie du domaine local (Q), de sorte que les modifications soudaines de la grandeur obtenue occasionnées au moyen de l'amélioration à la limite de la partie du domaine local ou se produisant sans l'utilisation des valeurs de mesure en provenance de l'environnement, sont réduites, sachant que le bilan local sur le secteur est maintenu.

11. Programme informatique pour le traitement de données de télédétection multispectrale avec des moyens de code source qui sont développés pour réaliser le procédé selon l'une des revendications 1 à 9.

12. Programme informatique avec des moyens de code source selon la revendication précédente, qui sont enregistrés sur un support de données lisible par ordinateur.

13. Support de données ou système informatique, sur lequel une structure de données est enregistrée, qui, après un chargement dans une mémoire de travail et/ou une mémoire principale d'un ordinateur ou d'un réseau d'ordinateurs, exécute le programme informatique selon la revendication 11 ou 12.

Figur 1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **VON Z.R. QI.** A new data fusion method for improving CBERS-1 IRMSS images based on CCD image. *The International Archives of Photogrammetry, Remote Sensing and Spatial Information Sciences,* vol. 34
- **VON BORIS ZHUKOV et al.** Unmixing-Based Multisensor Multiresolution Image Fusion. *IEEE Transactions on Geoscience and Remote Sensing,* Mai 1999, vol. 37 (3), 1212-1226
- **T. RANCHIN ; L. WALD.** Fusion of High Spatial and Spectral Resolution Images: The ARSIS Concept and Its Implementation. *Photogrammetric Engineering and Remote Sensing,* 2000, vol. 66 (1), 49-61